# EUROPEAN PATENT APPLICATION

(11) **EP 4 091 815 A1**
(43) Date of publication of application: **23.11.2022**
(21) Application number: 21740987.9
(22) Date of filing: 05.01.2021
(51) Int. Cl.: B32B 27/18, B32B 27/30, B32B 27/32

(54) **LAMINATED FILM**

(30) Priority: 17.01.2020 JP 2020005650; 11.08.2020 JP 2020135725
(71) Applicant: TOYOBO CO., LTD., Osaka-shi Osaka 5300001 (JP)
(72) Inventor: HAYASHI, Miyuki, Otsu-shi, Shiga 520-0292 (JP); TATSUTA, Masako, Otsu-shi, Shiga 520-0292 (JP); YAMADA, Koji, Otsu-shi, Shiga 520-0292 (JP); TERAMOTO, Yoshihiko, Otsu-shi, Shiga 520-0292 (JP); ITO, Katsuya, Osaka-shi, Osaka 530-8230 (JP)
(74) Representative: Vossius & Partner Patentanwälte Rechtsanwälte mbB
(86) International application number: PCT/JP2021/000129
(87) International publication number: WO 2021/145237

(57) **Abstract**

An object of the present invention is to provide a laminated film that exhibits superior water repellency and oil repellency and has good adhesion between a substrate film and a coating layer, and for this purpose, the laminated film is a laminated film comprising a substrate film and at least one coating layer laminated on the substrate film, wherein the coating layer contains an acid-modified polyolefin and hydrophobic oxide particles, and the acid-modified polyolefin has an acid value of 1 mgKOH/g or more and 60 mgKOH/g or less. Preferably, the laminated film is a solution means in which a surface of the coating layer has a contact angle with respect to water of 100 degrees or more.

## Description

### TECHNICAL FIELD

The present invention relates to a laminated film. More specifically, the present invention relates to a coated laminated film having water repellency and oil repellency.

### BACKGROUND ART

A material that exhibits water repellency and oil repellency on a surface is industrially important in a field requiring an antifouling property. In order to achieve the antifouling property, it is necessary to reduce the interaction between the pollutant and the material surface, and the antifouling property is usually achieved by water repellency or oil repellency of the material surface.

Conventionally, as a water repellent treatment method for exhibiting water repellency, a method of applying a fluorine-based resin, a silicon-based resin or the like having a surface energy lower than that of water to a film surface, a method of forming fine unevenness on a film surface in addition to those, etc. are known (for example. see Patent Documents 1 to 4).

However, in general, a coating method for imparting water repellency to a film surface has a problem that adhesion to a substrate is low and the coating layer easily falls off. In addition, in general, even if a film having a surface that exhibits water repellency and oil repellency can be formed, it is difficult to maintain the transparency of the film, and thus the properties as a film material are not necessarily sufficient.

### PRIOR ART DOCUMENT

### PATENT DOCUMENTS

Patent Document 1: JP-A-2000-284102
Patent Document 2: JP-A-2002-113805
Patent Document 3: JP-A-2018-103534
Patent Document 4: JP-A-2007-138027

### SUMMARY OF THE INVENTION

### PROBLEMS TO BE SOLVED BY THE INVENTION

The present invention has been made in view of the problems of the prior art. That is, an object of the present invention is to provide a laminated film which exhibits superior water repellency and oil repellency and has good adhesion between a substrate film and a coating layer.

### MEANS FOR SOLVING THE PROBLEMS

As a result of intensive studies, the present inventors have found that the above problems can be solved by the following means, and have reached the present invention. That is, the present invention has the following configurations.
1. A laminated film comprising a substrate film and at least one coating layer laminated on the substrate film, wherein the coating layer contains an acid-modified polyolefin and hydrophobic oxide particles, and the acid-modified polyolefin has an acid value of 1 mgKOH/g or more and 60 mgKOH/g or less.
2. The laminated film according to the above item 1, wherein the hydrophobic oxide particles have an average primary particle diameter of 5 nm to 300 nm.
3. The laminated film according to the above item 1 or 2, wherein a solid content of the hydrophobic oxide particles relative to a solid content of the coating layer is 10 to 90 mass%.
4. The laminated film according to any one of the above items 1 to 3, wherein the acid-modified polyolefin is an acid-modified polypropylene.
5. The laminated film according to any one of items 1 to 4, wherein a surface of the coating layer has a contact angle with respect to water of 100 degrees or more.
6. The laminated film according to any one of the above items 1 to 5, wherein the substrate film is a polyethylene terephthalate film, a polyethylene naphthalate film, or a polyimide film.

### EFFECT OF THE INVENTION

The laminated film of the present invention comprises at least a substrate layer and a coating layer, and the coating layer contains an acid-modified polyolefin, so that adhesion to the substrate film is good. In addition, when the coating layer contains hydrophobic oxide particles or an acid-modified polyolefin having a specific low acid value, water repellency and oil repellency on a surface of the coating layer of the laminated film is good.

### MODE FOR CARRYING OUT THE INVENTION

In the following, the present invention will be described in detail. The present invention provides a laminated film being capable of exhibiting superior antifouling properties and having useful water repellency and oil repellency. That is, the laminated film of the present invention is a laminated film comprising a substrate film and a coating layer laminated on the substrate film, in which the coating layer is a coating layer contains an acid-modified polyolefin having an acid value of 1 mgKOH/g or more and 60 mgKOH/g or less and hydrophobic oxide particles. Accordingly, laminated film exhibits superior water repellency and oil repellency on the outermost surface of the film, can firmly adhere to the substrate film, and further has high transparency.

### (Substrate film)

The laminated film in the present invention has a substrate film. The material of the substrate film is not particularly limited, but is preferably a resin film from the viewpoint of handleability such as flexibility. Examples of a resin constituting the resin film include polyolefins such as polyethylene, polypropylene, polystyrene and diene-based polymers, polyesters such as polyethylene terephthalate, polypropylene terephthalate, polybutylene terephthalate, and polyethylene naphthalate, polyamides such as nylon 6, nylon 6,6, nylon 6,10, and nylon 12, acrylate-based resins, polyacrylic acid-based resins and polymethacrylic acid-based resins such as polymethyl methacrylate, polymethacrylic acid esters, polymethyl acrylate, and polyacrylic acid esters, polyurethane-based resins, cellulose-based resins such as cellulose acetate and ethyl cellulose, aromatic hydrocarbon-based polymers such as polyarylate, aramid, polycarbonate, polyphenylene sulfide, polyphenylene oxide, polysulfone, polyethersulfone, polyetheretherketone, polyetherimide, polyimide, polyamideimide, polybenzimidazole, polybenzoxazole, and polybenzthiazole, fluorine-based resins such as polytetrafluoroethylene and polyvinylidene fluoride, epoxy resins, phenol resins, novolak resins, and benzoxazine resins. Among them, a film made of a polyester resin or an acrylate resin is preferable from the viewpoint of transparency and dimensional stability. Specific examples of the polyester resin include polyethylene terephthalate, polypropylene terephthalate, polybutylene terephthalate, and polyethylene naphthalate. Among them, polyethylene terephthalate, polyethylene naphthalate, and polyimide are preferable from the viewpoint of physical properties, and polyethylene terephthalate is particularly preferable from the viewpoint of balance between physical properties and cost.

The substrate film may include a single layer, or may include two or more kinds of layers laminated. When two or more kinds of layers are laminated, the same or different kinds of films may be laminated. On the substrate film may be laminated a resin composition. Furthermore, various additives may be contained in the substrate film as necessary as long as the effects of the present invention are exhibited. Examples of the additive include an antioxidant, a light resistance agent, a gelling inhibitor, an organic wetting agent, an anti-static agent, an ultraviolet absorber, and a surfactant. When the substrate film is composed of two or more kinds of layers, additives may be contained according to the function of each layer. Inert particles may be contained in the substrate film in order to improve handleability such as slipperiness and winding properties of the substrate film.

In the present invention, a thickness of the substrate film is not particularly limited, but is preferably 5 µm or more and 300 µm or less. The thickness is more preferably 10 µm or more and 280 µm or less, and even more preferably 12 µm or more and 260 µm or less. When the thickness is 5 µm or more, coating is easily performed at the time of laminating the coating layer, and when the thickness is 300 µm or less, this is advantageous in terms of cost.

A surface of the substrate film may be used in an untreated state, but may have been subjected to surface treatment in order to improve adhesion to the coating layer. Specifically, a substrate film on which an anchor coat layer is formed or to which surface treatment such as plasma treatment, corona treatment, or flame treatment has been applied may be used.

### (Hydrophobic oxide particles)

The coating layer of the laminated film in the present invention contains hydrophobic oxide particles. The hydrophobic oxide particles are not particularly limited as long as they have hydrophobicity, and for example, may be those afforded by hydrophobizing hydrophilic oxide particles by surface treatment. That is, those afforded by subjecting hydrophilic oxide particles to surface treatment with any reagent such as a silane coupling agent to hydrophobize the surface thereof may be used.

The type of the oxide is not particularly limited. For example, at least one of silica (silicon dioxide), alumina, titania, zirconia, and the like may be used. These may be those synthesized via an arbitrary compound, or those which are known or commercially available may be used. In particular, silica (silicon dioxide) particles are preferable because they are easily hydrophobized as described later.

As a method for hydrophobizing oxide particles typified by silica particles, surface treatment with various known reagents such as silicone oil, a silane coupling agent, and silazane is suitably used. In particular, from the viewpoint of exhibiting superior water repellency and oil repellency, it is more preferable to introduce a fluorine-based functional group represented by a 1H,1H,2H,2H-perfluorooctyl group, a 1H,1H,2H,2H-perfluorodecyl group, a 1H,1H,2H,2H-perfluorohexyl group, and a 3,3,3-trifluoropropyl group, an alkyl group represented by a methyl group, an ethyl group, a n-propyl group, an isopropyl group, a n-butyl group, an isobutyl group, a sec-butyl group, a tert-butyl group, and an octyl group, an alkenyl group, an alkynyl group, a vinyl group, a cyclohexyl group, a styryl group, a phenyl group, a trimethylsilyl group, or the like onto the surface. Among them, hydrophobic oxide particles into which a trimethylsilyl group is introduced are preferable because of exhibiting further superior water repellency and oil repellency, and hydrophobic silica into which a trimethylsilyl group is introduced is particularly preferable. Examples of a commercially available product corresponding to this include "AEROSIL (registered trademark) R812" and "AEROSIL (registered trademark) R812S" (both manufactured by Evonik Degussa).

Regarding the size of the hydrophobic oxide particles in the present invention, the average primary particle diameter is preferably 5 nm or more and 300 nm or less, more preferably 5 nm or more and 200 nm or less, even more preferably 5 nm or more and 150 nm or less, particularly preferably 5 nm or more and 100 nm or less, and most preferably 5 nm or more and 75 nm or less. By setting the average primary particle diameter within the above range, transparency as a laminated film is preferably maintained even when a coating layer is laminated on a substrate film. In the present invention, a plurality of kinds of hydrophobic oxide particles differing in particle size may be mixed and used. In the present invention, the size of the average primary particle diameter can be determined as a result of morphological observation with a microscope using a scanning electron microscope, a transmission electron microscope, or the like. Specifically, the average of the diameters of 20 particles arbitrarily selected in the microscopic observation is taken as the average primary particle diameter. The average primary particle diameter of indiscriminately shaped particles can be calculated as an equivalent circle diameter. The equivalent circle diameter is a value obtained by dividing the area of an observed particle by π, calculating a square root, and doubling the square root.

In the present invention, the measurement result by an X-ray photoelectron spectrometer (ESCA) can be used as an index of the modification ratio by functional groups having water repellency and oil repellency on the surface of hydrophobic oxide particles. Specifically, an atomic composition ratio is determined for a depth region of about 10 nm, and the ratio of specific atoms, for example carbon atoms, constituting the functional group having water repellency and oil repellency can be compared. In the present invention, from the viewpoint of exhibiting superior water repellency and oil repellency, for example, in the case of hydrophobic silica into which a trimethylsilyl group is introduced, the ratio of carbon atoms is preferably 8 at% or more.

### (Acid-modified polyolefin)

The acid-modified polyolefin in the present invention is not particularly limited, and examples of the polyolefin as a precursor preferably include polyethylene such as low density polyethylene (LDPE), high density polyethylene (HDPE), and low density polyethylene (LDPE), polypropylene, a propylene-ethylene block copolymer, and a propylene-α-olefin block copolymer.

Examples of the acid-modified polyolefin include those in which at least part of the polyolefin mentioned above is a polyolefin or an unsaturated carboxylic acid-modified polyolefin, and acid-modified polypropylene and acid-modified polyethylene are preferable, and unsaturated carboxylic acid-modified polypropylene and unsaturated carboxylic acid-modified polyethylene are more preferable. The unsaturated carboxylic acid-modified polyolefin is a product obtained by making a polyolefin and an unsaturated carboxylic acid undergo graft reaction to modify the polyolefin, and examples thereof include maleic anhydride-modified polypropylene and maleic anhydride-modified polyethylene. Examples of the unsaturated carboxylic acid include maleic acid, fumaric acid, acrylic acid, methacrylic acid, and acid anhydrides thereof, and among them, maleic anhydride and maleic acid are preferable. The acid value of the acid-modified polyolefin is preferably 1 mgKOH/g or more and 60 mgKOH/g or less, more preferably 1 mgKOH/g or more and 35 mgKOH/g or less, even more preferably 1 mgKOH/g or more and 25 mgKOH/g or less, and particularly preferably 1 mgKOH/g or more and 20 mgKOH/g or less. By using an acid-modified polyolefin satisfying the above-mentioned acid value, appropriate hydrophobicity can be secured while maintaining coatability to a substrate film.

### (Components in coating layer)

The coating layer in the present invention may contain components other than the hydrophobic oxide particles. Specific examples thereof include a binder component, an antioxidant, a light resistance agent, a gelling inhibitor, an organic wetting agent, an anti-static agent, an ultraviolet absorber, and a surfactant, and these components may be appropriately contained as necessary.

The binder component is not particularly limited as long as it is a component that can be well bonded to a substrate film. For example, it is preferable to use a polyester resin, a polypropylene resin, a polyurethane resin, an epoxy resin, an acrylic resin, or the like. Of course, it is a particularly preferable embodiment that an acid-modified polyolefin is contained as one kind of the binder component.

The hydrophobic oxide particles in the coating layer can be used at any ratio at which the water repellency and oil repellency of the laminated film can be exhibited, and the solid content thereof is preferably set to 10 to 90 mass% of the coating layer. The solid content is further preferably 20 to 80 mass%, and particularly preferably 30 to 70 mass%. By using the hydrophobic oxide particles at the above-mentioned ratio, superior water repellency and oil repellency can be exhibited on the laminated film.

### (Coating liquid)

In the present invention, a laminated film is obtained by laminating a coating layer directly or with another layer interposed on a substrate film. When the dispersion of the hydrophobic oxide particles contains an acid-modified polyolefin, the coating liquid for forming the coating layer may be used as it is, but may contain various components forming the coating layer, such as other binder components, or a plurality of appropriate solvents singly or in combination.

### (Process of manufacturing laminated film)

In the manufacture of the laminated film of the present invention, the method of coating is not particularly limited. For example, it can be manufactured according to a known method such as roll coating, gravure coating, bar coating, doctor blade coating, spin coating, spray coating, or brush coating. The solvent to be used for coating by these methods is not particularly limited, and for example, water or organic solvents such as alcohols, ketones, normal hexane, cyclohexane, toluene, butyl acetate, and glycols can be appropriately selected and used. These solvents may be used singly or two or more of them may be used in combination. The dispersion amount of the hydrophobic oxide particles with respect to the solvent can be chosen at an arbitrary ratio at which a uniform dispersion is obtained. The method for drying after coating may be either natural drying or heat drying, but heat drying is preferable from the viewpoint of industrial production. The drying temperature is not particularly limited as long as it does not affect the components contained in the substrate film and the coating layer, but is usually preferably 200°C or less, and more preferably 50°C or more and 160°C or less. The drying method is not particularly limited, and a known method for drying a film, such as a hot plate or a hot air oven, can be used. The drying time is appropriately chosen depending on other conditions such as a drying temperature, but may be in a range that does not affect the components contained in the substrate film and the coating layer.

### (Water repellency and oil repellency)

The water repellency and oil repellency of the laminated film according to the present invention can be evaluated by a known method. Specifically, the water repellency can be evaluated by contact angle measurement using water, and the oil repellency can be evaluated by contact angle measurement using diiodomethane. The range of the contact angle with respect to water in the present invention is preferably 100 degrees or more, and more preferably 120 degrees or more. A contact angle with respect to water of 100 degrees or more is preferable because superior water repellency is exhibited, and a contact angle with respect to water of 120 degrees or more is more preferable because water repellency equal to or higher than that of conventional fluororesin sheet typified by polytetrafluoroethylene (PTFE) is exhibited. The upper limit of the contact angle with respect to water relates to the contact angle with respect to diiodomethane described below, but is preferably 180 degrees or less. The range of the contact angle with respect to diiodomethane in the present invention is preferably 60 degrees or more, and more preferably 90 degrees or more. A contact angle with respect to diiodomethane of 60 degrees or more is preferable because oil repellency capable of suppressing oil stain and the like can be imparted. A contact angle with respect to diiodomethane of 90 degrees or more is more preferable because oil repellency equal to or higher than that of conventional fluororesin sheet is exhibited. The upper limit, which relates to the degree of a contact angle with respect to water, is preferably 180 degrees or less.

### EXAMPLES

In the following, the present invention will be further described with reference to specific examples, but the present invention is not limited to the embodiments of these examples. First, the evaluation methods adopted in the present invention will be described.

### (Measurement of contact angle)

For the surface of the coating layer of the laminated film prepared, a contact angle with respect to a solvent was measured. For contact angle measurement, a fully automatic contact angle meter DM-701 manufactured by Kyowa Interface Science Co., Ltd. was used. Pure water and diiodomethane were used as measurement solvents. The water contact angle, which may hereinafter be abbreviated as WCA, was measured 60 seconds after dropping 1.8 µL of a droplet of water. The diiodomethane contact angle, which may hereinafter be abbreviated as DCA, was measured 30 seconds after dropping 0.9 µL of a droplet of diiodomethane.

### (Measurement of adhesion)

Adhesion between the film and the coating layer was examined by measuring peel strength. The peel strength (unit: N/cm) was measured using JSV-H1000 manufactured by Japan Instrumentation System Co., Ltd. In Examples of the present invention, 2 N/cm or more was regarded as acceptable.

### (Measurement of average primary particle diameter)

The average primary particle diameter of the hydrophobic oxide particles was determined as a result of observation with a scanning electron microscope or a transmission electron microscope. Specifically, the average of the diameters of 20 particles arbitrarily selected in the microscopic observation was taken as the average primary particle diameter. The average primary particle diameter of indiscriminately shaped particles can be calculated as an equivalent circle diameter. The equivalent circle diameter is a value obtained by dividing the area of an observed particle by π, calculating a square root, and doubling the square root.

### (Method for measuring acid value)

The acid value (mgKOH/g-resin) in the present invention refers to the amount of KOH required to neutralize 1 g of an acid-modified polyolefin, and was measured in accordance with the test method of JIS K 0070 (1992). Specifically, 1 g of an acid-modified polyolefin was dissolved in 100 g of xylene whose temperature had been adjusted to 100°C, and then at the same temperature titration was performed with a 0.1 mol/L potassium hydroxide ethanol solution (trade name "0.1 mol/L ethanolic potassium hydroxide solution" manufactured by Wako Pure Chemical Industries, Ltd.) using phenolphthalein as an indicator. At this time, the amount of the potassium hydroxide required for the titration was converted into mg to calculate an acid value (mgKOH/g).

### (ESCA measurement of hydrophobic oxide particles)

The hydrophobic oxide particle dispersion was dropped on a clean aluminum foil and dried to form a hydrophobic oxide particle thin film on the aluminum foil. At this time, the sample was quickly dried such that surface stain did not occur as much as possible, immediately sampled, and then subjected to surface composition analysis.

K-Alpha⁺ (manufactured by Thermo Fisher Scientific) was used as a device. Details of the measurement conditions are shown below. During the analysis, the background was removed by the Shirley method. In addition, the surface composition ratio was an average value of measurement results taken at three or more sites of the substrate where Al was not detected.
- Measurement conditions
   Excited X-ray: monochromatized AlKα ray
   X-ray output: 12 kV, 6 mA
   Photoelectron take-off angle: 90 degrees
   Spot size: 400 µm in diameter
   Pass energy: 50 eV
   Step: 0.1 eV

### <Production example of maleic anhydride-modified polypropylene A-1>

### Production Example 1

To a 1 L autoclave were added 100 parts by mass of polypropylene, 150 parts by mass of toluene, 3 parts by mass of maleic anhydride, and 1 part by mass of di-tert-butyl peroxide, and the mixture was heated to 140°C and then further stirred for 1 hour. After completion of the reaction, the reaction liquid was charged into a large amount of methyl ethyl ketone to precipitate a resin. The resin was further washed with methyl ethyl ketone several times to remove unreacted maleic anhydride. The resulting resin was dried under reduced pressure to afford maleic anhydride-modified polypropylene (acid value: 6 mgKOH/g, weight average molecular weight: 60,000, Tm: 80°C) as an acid-modified polyolefin.

### <Production example of maleic anhydride-modified polypropylene B-1>

To a 1 L autoclave were added 100 parts by mass of polypropylene, 150 parts by mass of toluene, 8.5 parts by mass of maleic anhydride, and 4 parts by mass of di-tert-butyl peroxide, and the mixture was heated to 140°C and then further stirred for 1 hour. After completion of the reaction, the reaction liquid was charged into a large amount of methyl ethyl ketone to precipitate a resin. The resin was further washed with methyl ethyl ketone several times to remove unreacted maleic anhydride. The resulting resin was dried under reduced pressure to afford maleic anhydride-modified polypropylene (acid value: 12.7 mgKOH/g, weight average molecular weight: 60,000, Tm: 80°C) as an acid-modified polyolefin.

### <Production example of maleic anhydride-modified polypropylene C-1>

To a 1 L autoclave were added 100 parts by mass of polypropylene, 150 parts by mass of toluene, 22 parts by mass of maleic anhydride, and 4 parts by mass of di-tert-butyl peroxide, and the mixture was heated to 140°C and then further stirred for 1 hour. After completion of the reaction, the reaction liquid was charged into a large amount of methyl ethyl ketone to precipitate a resin. The resin was further washed with methyl ethyl ketone several times to remove unreacted maleic anhydride. The resulting resin was dried under reduced pressure to afford maleic anhydride-modified polypropylene (acid value: 22.9 mgKOH/g, weight average molecular weight: 60,000, Tm: 80°C) as an acid-modified polyolefin.

### <Production examples of maleic anhydride-modified polypropylene solutions A-2, B-2 and C-2>

To a reaction vessel, 25 g of maleic anhydride-modified polypropylene A-1 was weighed, and 475 g of a mixed solvent of cyclohexane and methyl ethyl ketone (mixed mass ratio = 9 : 1) was added thereto. The mixture was stirred for 1 hour or more to afford maleic anhydride-modified polypropylene solution A-2 having a solid concentration of 5 mass%. Similarly, regarding maleic anhydride-modified polypropylene B-1 and C-1, solutions having a solid concentration of 5 mass% were prepared in the same manner as described above, and named maleic anhydride-modified polypropylene solutions B-2 and C-2, respectively.

### <Production example of silica particle Dispersion D>

As hydrophobic silica, commercially available AEROSIL (registered trademark) R812S (manufactured by Evonik, average primary particle diameter: 7 nm) having trimethylsilyl groups on the surface was used. To a reaction vessel was weighed 25 g of R812S, 475 g of a mixed solvent of cyclohexane and methyl ethyl ketone (mixed mass ratio = 9 : 1) was added thereto, and the mixture was stirred for 12 hours or more. Then, an ultrasonic homogenizer was applied for 10 minutes to afford silica particle dispersion D having a solid concentration of 5 mass%.

### <Production example of silica particle Dispersion E>

As hydrophobic silica, commercially available silica particles modified with dimethyldichlorosilane, AEROSIL (registered trademark) R972 (manufactured by Evonik, average primary particle diameter: 60 nm) were used. To a reaction vessel was weighed 25 g of R972, 475 g of a mixed solvent of cyclohexane and methyl ethyl ketone (mixed mass ratio = 9 : 1) was added thereto, and the mixture was stirred for 12 hours or more. Then, an ultrasonic homogenizer was applied for 10 minutes to afford silica particle dispersion E having a solid concentration of 5 mass%.

### <Production example of silica particle Dispersion F>

In a reaction vessel 1, 100 parts by mass of tetraethoxysilane and 339 parts by mass of ethanol were mixed. In a reaction vessel 2, 179 parts by mass of ethanol, 14 parts by mass of ammonia water (25%), and 125 parts by mass of deionized water were mixed, and then the contents in the reaction vessel 2 were added dropwise to the reaction vessel 1 and transferred thereto. At this time, the mixture was added dropwise over 10 minutes in order to prevent an abrupt reaction. After completion of the dropwise addition, the reaction solution was allowed to stand at 20°C for 48 hours. Then, ammonia and water were distilled off by distillation to prepare a silica particle dispersion (average primary particle diameter: 260 nm). Then, 150 parts by mass of hexamethyldisilazane was added, and the mixture was heated at 65°C for 2 days to prepare a dispersion of silica fine particles modified with trimethylsilyl groups. In order to confirm the solid concentration of the silica fine particle dispersion, 5 g of the silica fine particle dispersion was weighed and taken in an aluminum cup (1.3 g), and heated in an oven at 150°C for 24 hours or more to remove ethanol and water as residual solvents. Because the aluminum cup after the removal was weighed to be 1.55 grams, the solid content in 5 grams of the silica fine particle dispersion was calculated to be 0.25 grams, and the solid concentration of the silica fine particle dispersion was confirmed to be 5 mass%. Then, in order to prepare a coating liquid, ethanol in the silica fine particle dispersion was removed, and a mixed solvent of cyclohexane and methyl ethyl ketone (mixed mass ratio = 9 : 1) in the same amount as the removed ethanol was added to afford silica particle dispersion F having a solid concentration of 5 mass% with cyclohexane/methyl ethyl ketone = 9/1 as a solvent.

### <Production example of coating liquid>

To a reaction vessel were added 40 parts by mass of maleic anhydride-modified polypropylene solution A-2, 40 parts by mass of silica particle dispersion E, and 20 parts by mass of a mixed solvent of cyclohexane and methyl ethyl ketone (mixing mass ratio = 9 : 1), and the mixture was stirred at room temperature for 1 hour to prepare a coating liquid.

### <Preparation of coating film>

### (Example 1)

The coating liquid described above was applied to a corona-treated surface of a TOYOBO ESTER (registered trademark) film (product number: E5100, thickness: 75 µm), which was a film made of polyethylene terephthalate (hereinafter, the film may be referred to as PET film), by a bar coating method using a bar coater #3, and then dried at 120°C for 1 minute to afford a coating film.

### (Examples 2 to 12)

In the following, the type and blending amount of the acid-modified polypropylene solution in the coating liquid and the type and blending amount of the silica particle dispersion were changed as shown in Table 1 to afford coating films of Examples 2 to 12.

**[Table 1]**

| | Acid-modified PP solution | Acid-modified PP acid value (mgKOH/g) | Acid-modified PP (mass%) | Silica particles Dispersion | Particle diameter (nm) of silica particles | Silica particles (mass% ) | WCA (degrees) | DCA (degrees) | Peel strength (N/cm) between PET film and coating layer |
|---|---|---|---|---|---|---|---|---|---|
| Example 1 | A-2 | 6.0 | 2.0 | D | 7 | 2.0 | 151.7 | 105.3 | 2.2 |
| Example 2 | A-2 | 6.0 | 1.0 | D | 7 | 1.0 | 153.7 | 92.0 | 2.8 |
| Example 3 | A-2 | 6.0 | 1.0 | D | 7 | 2.0 | 151.6 | 107.0 | 2.3 |
| Example 4 | A-2 | 6.0 | 0.5 | D | 7 | 0.5 | 150.6 | 101.3 | 3.2 |
| Example 5 | A-2 | 6.0 | 0.2 | D | 7 | 0.2 | 153.5 | 101.2 | 3.4 |
| Example 6 | A-2 | 6.0 | 0.2 | D | 7 | 0.1 | 152.6 | 101.4 | 3.7 |
| Example 7 | B-2 | 12.7 | 2.0 | D | 7 | 2.0 | 151.3 | 79.3 | 3.4 |
| Example 8 | B-2 | 12.7 | 1.0 | D | 7 | 2.0 | 151.7 | 120.1 | 2.5 |
| Example 9 | C-2 | 22.9 | 2.0 | D | 7 | 2.0 | 150.8 | 103.6 | 5.2 |
| Example 10 | C-2 | 22.9 | 1.0 | D | 7 | 2.0 | 151.7 | 120.2 | 2.5 |
| Example 11 | A-2 | 6.0 | 2.0 | E | 60 | 2.0 | 133.4 | 94.6 | 3.1 |
| Example 12 | A-2 | 6.0 | 2.0 | F | 260 | 2.0 | 120.5 | 90.2 | 2.7 |

The contents of the acid-modified PP and the silica particles are expressed by the solid content mass% of each component in the coating liquid.

### (Comparative Example 1)

A maleic anhydride-modified polypropylene solution A-2 (solid content: 5 mass%) was applied to a corona-treated surface of PET film E5100 using a bar coater #3, and then dried at 120°C for 1 minute, affording a coating film.

### (Comparative Example 2)

A coating film was obtained in the same manner as in Example 1 except that the maleic anhydride-modified polypropylene solution A-2 in Example 1 was changed for a non-modified polypropylene-based solution having the same concentration and the silica fine particle dispersion was not blended. The evaluation results of Comparative Examples 1 and 2 are shown in Table 2.

**[Table 2]**

| | Acid-modified PP solution | Acid-modified PP acid value (mgKOH/g) | Acid-modified PP (mass%) | Silica particles (mass%) | WCA (degrees) | DCA (degrees) | Peel strength (N/cm) between PET film and coating layer |
|---|---|---|---|---|---|---|---|
| Comparative Example 1 | A-2 | 6.0 | 5 | 0 | 99.6 | 53.7 | 5 or more |
| Comparative Example 2 | Unmodified PP solution | 0 | 5 | 0 | 105.3 | 57.9 | 0.5 |

The contents of the acid-modified PP and the silica particles are expressed by the solid content mass% of each component in the coating liquid.

Comparative Example 2 is not an acid-modified PP solution but a non-modified PP solution.

Here, the results of the analysis of the surfaces of the silica particles contained in silica particle dispersions D to F by ESCA are shown in Table 3.

**[Table 3]**

| Particle dispersion | Result of ESCA analysis of particle surface | | | | | |
|---|---|---|---|---|---|---|
| | Si | c | 0 | N | Al | Cl |
| D(R812S) | 33.0 | 8.4 | 58.6 | <0.1 | <0.1 | <0.1 |
| E (R972) | 31.3 | 8.5 | 60.0 | <0.1 | <0.1 | 0.2 |
| F | 30.1 | 14.2 | 55.7 | <0.1 | <0.1 | <0.1 |

| | | | | | | |
|---|---|---|---|---|---|---|
| (unit: at%) | | | | | | |

### INDUSTRIAL APPLICABILITY

According to the present invention, it is possible to provide a laminated film superior in water repellency and oil repellency and capable of exhibiting antifouling properties. The laminated film according to the present invention is useful because it can be expected to be applied to applications such as packaging, covering, and release materials.

## Claims

1. A laminated film comprising a substrate film and at least one coating layer laminated on the substrate film, wherein the coating layer contains an acid-modified polyolefin and hydrophobic oxide particles, and the acid-modified polyolefin has an acid value of 1.0 mgKOH/g or more and 60 mgKOH/g or less.

2. The laminated film according to claim 1, wherein the hydrophobic oxide particles have an average primary particle diameter of 5 nm to 300 nm.

3. The laminated film according to claim 1 or 2, wherein a solid content of the hydrophobic oxide particles relative to a solid content of the coating layer is 10 to 90 mass%.

4. The laminated film according to any one of claims 1 to 3, wherein the acid-modified polyolefin is an acid-modified polypropylene.

5. The laminated film according to any one of claims 1 to 4, wherein a surface of the coating layer has a contact angle with respect to water of 100 degrees or more.

6. The laminated film according to any one of claims 1 to 5, wherein the substrate film is a polyethylene terephthalate film, a polyethylene naphthalate film, or a polyimide film.
